# FASCICULE DE BREVET EUROPEEN

(11) **EP 1 303 995 B1**
(45) Date de publication et mention de la délivrance du brevet: **24.11.2004**
(21) Numéro de dépôt: 01969883.6
(22) Date de dépôt: 13.09.2001
(51) Int. Cl.: H04Q 3/00

(54) **PROCEDE ET DISPOSITIF DE COORDINATION DE SERVICES DE TELECOMMUNICATION**
KOORDINATIOVERFAHREN UND VORRICHTUNG ZUR KOORDINATION VON TELEKOMMUNIKATIONSDIENSTEN
METHOD AND DEVICE FOR CO-ORDINATING TELECOMMUNICATION SERVICES

(30) Priorité: 14.09.2000 FR 0011999
(43) Date de publication de la demande: 23.04.2003
(73) Titulaire: FRANCE TELECOM, 75015 Paris (FR)
(72) Inventeur: VIEL, Ronan, F-14000 Caen (FR)
(74) Mandataire: Jeune, Pascale
(86) Numéro de dépôt international: PCT/FR2001/002852
(87) Numéro de publication internationale: WO 2002/023919

(56) Documents cités:
- EP-A- 0 374 131
- WO-A-00/42760

## Description

### Domaine de l'invention

La présente invention se rapporte à un procédé et à un système de coordination d'utilisation de services de télécommunication.

L'invention s'inscrit dans le domaine des services de télécommunication sur des architectures de systèmes répartis et dans le domaine du réseau intelligent.

### Description de l'art antérieur

Dans tout le texte, un service de télécommunication désigne tout service accessible à un utilisateur depuis un terminal de télécommunication et à travers un réseau, que ce dernier soit un réseau téléphonique ou un réseau informatique tel un réseau de données du type Internet. Le terminal de télécommunication est soit un terminal informatique, soit un terminal téléphonique. Pour illustrer la notion de service, quatre services sont listés ci-après à titre d'exemples. Un premier service consiste à offrir une communication avec un autre utilisateur, soit avec un lien qui transporte uniquement des données audio, soit avec un lien qui transporte en outre des données vidéo. Un deuxième service consiste à offrir la consultation à des bases de données. Un troisième service consiste à offrir du traitement de données sous la forme par exemple de gestion de comptes bancaires. Un quatrième service consiste à offrir du stockage de données sous la forme, par exemple, d'un message dans une messagerie. Le document WO 00/42760 représente l'état de la technique et divulgue un procédé de coordination d'utilisation de services de télécommunications dans lequel un utilisateur sollicite l'utilisation d'un service chaque demande d'accès d'un service active un profil d'utilisateur et des sessions de service

L'invention trouve une application très avantageuse en ce qu'elle permet de coordonner, lors de leur exécution, différents services de télécommunication entre eux, pour le compte d'un même utilisateur, même si ces services sont effectivement rendus par des opérateurs de télécommunication différents. Ainsi, l'invention peut permettre de fournir à un client un contrat unique de service garantissant la cohérence d'exécution des différents services de télécommunication entre eux et la facturation unique de ces services même si ces derniers sont effectivement rendus par des opérateurs de télécommunication ou de services différents.

Actuellement, le consommateur qui utilise différents services de télécommunication n'a pas toujours la garantie de cohérence d'exécution entre ces différents services. Lorsque des incohérences sont détectées, elles sont généralement désignées par les termes « interaction négative ». Ce problème d'interaction négative apparaît en particulier lorsque les services s'exécutent simultanément ou lorsqu'ils sont rendus par des opérateurs de télécommunication ou de services différents. Un cas d'interaction négative peut se présenter lorsque l'utilisateur a accès à un premier service portant sur la communication à partir d'un téléphone mobile et à un second service portant sur un accès au réseau Internet à partir d'un terminal informatique, les deux services étant fournis par le même opérateur de télécommunication. Cet utilisateur n'a pas nécessairement l'assurance que l'utilisation de services sur Internet au moyen du premier service de communication par téléphone mobile soit identique, ou cohérent, avec l'utilisation de services sur Internet au moyen du second service, et ce indépendamment des capacités des terminaux ou des réseaux eux-mêmes. Par exemple, le service sur Internet utilisé peut ne pas reconnaître le même utilisateur suivant que ce dernier accède au service depuis un téléphone mobile ou depuis un autre terminal. En effet, chacun des services reconnaît l'utilisateur par la connaissance qu'il a d'un profil de cet utilisateur ; ce profil pouvant comprendre le nom de l'utilisateur, son adresse, une liste des services souscrits par l'utilisateur, des profils personnalisés d'accès à des services...Ainsi, chaque service détermine le profil d'utilisateur qu'il gère.

En outre, chaque opérateur fait des offres de services auxquels l'utilisateur peut demander l'accès en composant par exemple soit un numéro téléphonique particulier, soit un code d'accès, soit un numéro de carte, type numéro de carte téléphonique. Lorsque l'utilisateur fait une demande d'accès à un service et que sa demande est validée, il lui est associé une session de service, c'est-à-dire un chemin d'accès pour utiliser le service. Une fois qu'il utilise un premier service donné, l'utilisateur peut souhaiter utiliser un second service. Malgré les contrats passés avec l'opérateur, l'enchaînement du premier service au second service n'est pas toujours possible ou conforme à ces contrats. Une telle situation se rencontre par exemple lors de l'utilisation d'une carte téléphonique d'une certaine catégorie qui permet de téléphoner de tout poste téléphonique existant. En composant à partir d'un poste téléphonique quelconque un code d'accès, puis un code lié à la carte, l'utilisateur accède au service d'appel lié à la carte ; ce service d'appel lui permettant d'utiliser ce poste téléphonique quelconque comme s'il s'agissait d'un poste téléphonique privé. En particulier, l'utilisateur peut interroger un service de renseignement téléphonique développé par l'opérateur. Si le renseignement demandé consiste en un numéro de téléphone d'un correspondant, l'utilisateur peut obtenir la mise en relation avec ce correspondant, bien que cette possibilité ne lui soit pas permise lors d'un appel direct à ce correspondant par le service de la carte téléphonique. L'enchaînement du premier service, le service lié à la carte téléphonique, au second service, le service de mise en relation depuis un service de renseignement, n'est pas cohérent. En effet, il existe un contrat, entre le client de la carte et le service lié à la carte, qui définit les conditions d'utilisation de cette carte, en particulier la zone géographique dans laquelle l'utilisateur peut joindre un correspondant. Or, le service de renseignement n'a pas connaissance du contenu de ce contrat et, en particulier, des restrictions limitant la zone géographique joignable. Par conséquent, le service de renseignement autorise l'utilisateur à joindre le correspondant demandé bien que ce correspondant soit dans une zone géographique non joignable par l'utilisateur suivant les restrictions de son contrat.

Pour lutter contre les interactions négatives entre différents services, des procédés connus sont mis en oeuvre. Ils consistent à définir un mécanisme de dialogue direct entre les différents services auxquels accède un même utilisateur. Ces procédés ont pour inconvénient d'imposer une architecture commune aux différents services et, par conséquent, de lier entre elles les évolutions des différents services.

Aussi, le problème technique à résoudre par l'objet de la présente invention est de proposer un procédé de coordination d'utilisation de services de télécommunication qui permette d'éviter le problème d'interaction négative entre des services de télécommunication auxquels veut accéder un même utilisateur et qui ne présente pas les inconvénients précédents.

### Résumé de l'invention

Une solution au problème technique posé consiste, selon la présente invention, en ce que ledit procédé comprend les étapes qui consistent :
- à chaque demande d'accès à un service émanant d'un utilisateur, à activer un environnement unique composé d'un profil de cet utilisateur et de sessions de service associées à cet utilisateur et à traiter la validation de la demande d'accès au service,
- à attribuer une session unique à chaque service dont la demande d'accès est valide, cette session faisant partie de l'environnement unique de l'utilisateur,
- à gérer l'environnement unique, en modélisant les états que peut prendre l'environnement de l'utilisateur et en modélisant les relations entre ses états par au moins un diagramme d'états dans lequel les changements d'états sont déclenchés par des événements donnés dont certains sont associés aux différentes prestations offertes par les services,
- à accorder une demande de prestation formulée par un utilisateur auprès d'un service ayant une session, en fonction de l'état courant du diagramme d'états de l'environnement de l'utilisateur et des événements associés à la demande de prestation et,
- à mettre à jour l'environnement de l'utilisateur lors du passage à l'état suivant du diagramme d'états du service.

En outre, l'invention a pour objet un système de coordination d'utilisation de services de télécommunication, l'utilisation d'un service étant sollicitée par un utilisateur depuis un terminal de télécommunication et les services de télécommunication étant connectés au système de coordination par un réseau. Ledit système de coordination comprend :
- un module d'accès, premier point d'entrée du système de coordination auquel s'adresse tout service, dit service demandeur, qui reçoit une demande d'accès émanant d'un utilisateur,
- un module de gestion de profils en liaison avec le module d'accès et comprenant une base de données de profils d'utilisateurs et de profils de services et comprenant au moins un gestionnaire de profils en liaison avec la base de données,
- un module contractuel comprenant une liste de contrats souscrits par des utilisateurs auprès de services de télécommunication, des informations sur ces services de télécommunication et une liste de tarification d'accès et de prestations et,
- au moins un gestionnaire d'environnement, en liaison avec le module de gestion de profils et le module contractuel, second point d'entrée du système de coordination, auquel s'adresse tout service dont la demande d'accès est valide et qui reçoit une demande de prestation émanant d'un utilisateur ou qui souhaite obtenir des informations sur cet utilisateur ou qui souhaite obtenir des informations sur son environnement courant.

Le procédé et le système de coordination conformes à l'invention résolvent le problème posé. En effet, la gestion centralisée de l'environnement de l'utilisateur permet d'associer à un utilisateur une adresse d'environnement unique qui correspond à un gestionnaire d'environnement. Ce gestionnaire d'environnement dialogue avec tous les services auxquels l'utilisateur veut accéder et il met à jour au moins un diagramme d'états caractéristique de l'environnement de l'utilisateur. Ce diagramme d'états évolue en fonction des services auxquels l'utilisateur accède et des prestations que l'utilisateur sollicite auprès de ces services.

Le procédé et le système de coordination fournissent aux services les informations dont ils ont besoin à condition que ces informations puissent être partagées sans risque. Le procédé et le système de coordination interdisent ainsi une perte de cohérence entre toutes les données caractérisant l'utilisateur et son environnement et ils garantissent un verrouillage de l'accès à des données confidentielles. Ils effectuent des opérations pour le compte des services tout en garantissant le respect du contrat passé entre le service et un client. Le client et l'utilisateur peuvent être une même personne physique ou des personnes physiques différentes ou, le client peut être une personne morale qui désigne un ou plusieurs utilisateurs qui sont des personnes physiques ou morales.

La connaissance à tout instant de l'environnement de l'utilisateur permet au procédé et au système de coordination de pouvoir donner la localisation courante de l'utilisateur, c'est-à-dire son adresse sur le réseau. La mise en oeuvre de cette fonction de localisation peut s'appuyer sur un, ou plusieurs, serveur déjà existant tel le HLR, abréviation des termes anglo-saxons Home Location Register, du réseau GSM.

Le problème d'interaction négative est résolu selon l'invention, en particulier au moyen d'un dialogue entre le système de coordination et chacun des services demandeurs. Ainsi, les évolutions d'un service peuvent se faire indépendamment des évolutions d'un autre service.

De manière avantageuse, le procédé et le système de coordination selon l'invention n'imposent pas une plate-forme de développement particulière, ni pour le système de coordination, ni pour les services. Le procédé et le système n'imposent pas non plus une architecture commune aux services demandeurs.

De manière avantageuse, le procédé et le système de coordination selon l'invention peuvent en outre effectuer une identification et/ou une authentification de l'utilisateur.

### Brève description des dessins

D'autres caractéristiques et avantages de l'invention apparaîtront lors de la description qui suit d'exemples particuliers de réalisation de l'invention. La description est faite en regard des figures suivantes annexées données à titre d'exemples non limitatifs.

La figure 1 est un organigramme d'un procédé selon l'invention.

La figure 2 est un schéma bloc d'un système de coordination selon l'invention.

La figure 3 est un schéma d'utilisation multiservices d'un système de coordination selon l'invention.

### Description détaillée d'un mode de réalisation

Le contexte dans lequel se place l'invention est le suivant. Un utilisateur sollicite l'utilisation d'un service, parmi différents services de télécommunication, depuis un terminal de télécommunication. Les différents services de télécommunication sont connectés par un réseau téléphonique ou informatique à un système de coordination qui met en oeuvre un procédé de coordination d'utilisation de services de télécommunication, selon l'invention, qui gère une base centralisée de profils d'utilisateurs.

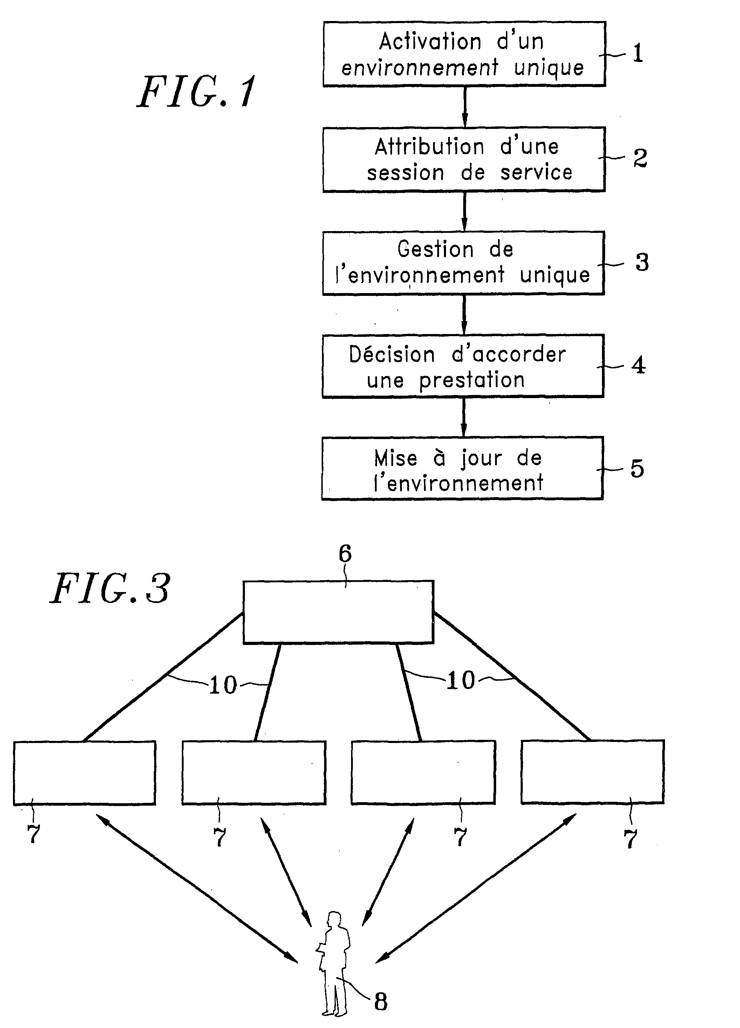

Le procédé de coordination d'utilisation de services de télécommunication selon l'invention se déroule suivant plusieurs étapes décrites ci-après et illustrées par la figure 1.

Dans une première étape 1, à chaque demande d'accès d'un utilisateur à un service, le procédé active un environnement unique basé sur le profil de cet utilisateur. Si un environnement est déjà activé pour cet utilisateur, il est utilisé pour la suite du traitement. En outre, le procédé traite la validation de la demande d'accès au service. La demande d'accès est refusée, c'est-à-dire non validée, lorsque l'utilisateur ne peut pas utiliser ce service. Les raisons pour lesquelles un utilisateur ne peut pas utiliser un service sont variées. Elles peuvent être dictées par la teneur des contrats passés entre l'utilisateur et l'opérateur du service. Elles peuvent être liées aux conditions d'utilisation du service. Par exemple, un service donné peut n'être accessible qu'à partir de certains terminaux.

Dans une deuxième étape 2, le procédé attribue une session de service unique à chaque service dont l'activation a été validée. Cette session fait alors partie de l'environnement unique de l'utilisateur.

Dans une troisième étape 3, le procédé gère l'environnement unique en modélisant les états que peut prendre l'environnement de l'utilisateur et les relations entre ses états par au moins un diagramme d'états dans lequel les changements d'états sont déclenchés par des événements donnés dont certains sont associés aux différentes prestations offertes par les services. L'exemple suivant correspond à une réalisation particulière dans laquelle la gestion de l'environnement est faite au moyen de plusieurs diagrammes d'états. A chaque session de service correspond un diagramme d'états et l'environnement est associé à un autre diagramme d'états. Parmi les différents états d'un diagramme d'états, il y a toujours un état début et un état fin. Entre ces deux états, les états dépendent de la modélisation faite, soit du service, soit de l'environnement. Par exemple, dans le diagramme d'un service, il peut être défini un état initial, un état autorisation de taxation et un état taxation. L'état initial est atteint depuis l'état début après réception d'une demande d'accès au service émanant d'un utilisateur. L'état autorisation de taxation est atteint depuis l'état initial après la validation donnée à la demande d'accès au service. L'état taxation est atteint depuis l'état autorisation de taxation après que la demande de prestation demandée par l'utilisateur soit accordée. Et l'état fin est atteint depuis les états initial, autorisation de taxation et taxation après que la décision soit prise d'interrompre l'utilisation du service. La décision peut résulter d'une action de l'utilisateur qui souhaite interrompre lui-même l'utilisation. Elle peut être prise par le procédé en fonction des conditions d'utilisation du service, en fonction du contenu d'un contrat, en fonction du montant d'un crédit accordé à l'utilisateur.

Dans une quatrième étape 4, le procédé accorde une autorisation à une demande de prestation formulée par un utilisateur auprès d'un service, auquel a été attribué une session de service, en fonction de l'état courant du diagramme d'états de l'environnement de l'utilisateur, des spécifications d'utilisation du service telles qu'indiquées dans le contrat, de la nature de la demande et des événements associés à la demande de prestation.

Dans une cinquième étape 5, le procédé met à jour l'environnement et, en particulier le profil de l'utilisateur, lors du passage à l'état suivant du diagramme d'états.

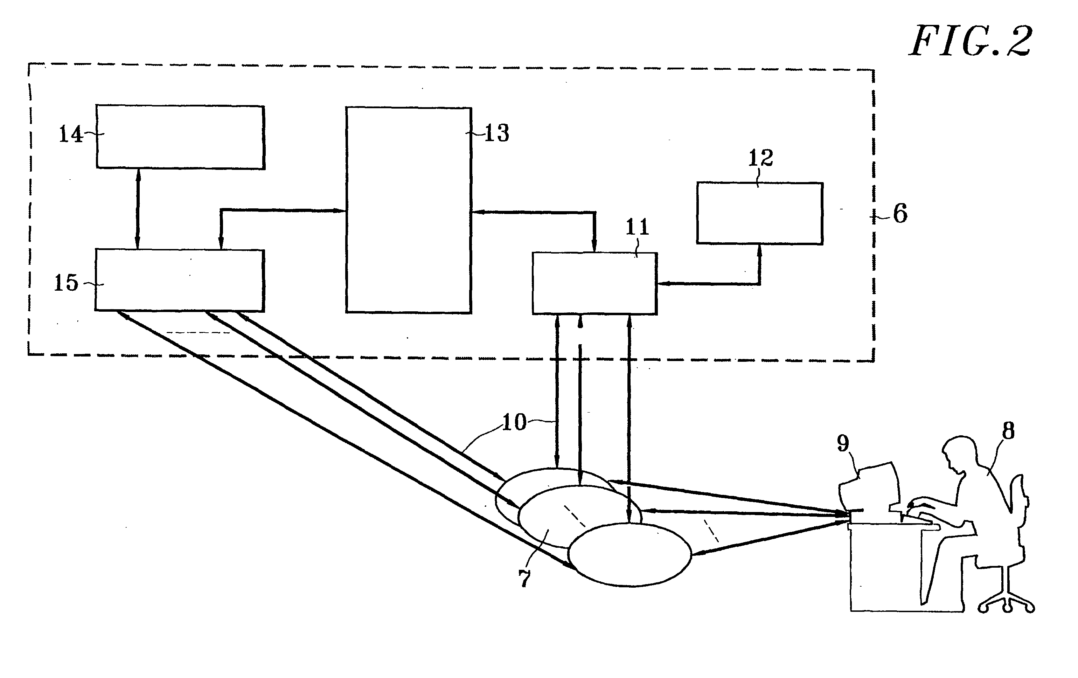

La figure 2 est un schéma d'un système 6 de coordination selon l'invention auquel s'adresse un service 7 de télécommunication sollicité par un utilisateur 8. L'utilisateur 8 sollicite un, ou plusieurs, service 7 de télécommunication depuis un terminal 9 de télécommunication tel un téléphone fixe ou mobile ou, tel un poste informatique. Les services 7 de télécommunication sont connectés au système de coordination par un réseau 10.

Le système 6 de coordination comprend un module 11 d'accès, un module 12 d'identification et d'authentification, un module 13 de gestion de profils, un module 14 contractuel et un gestionnaire 15 d'environnement.

Le module 11 d'accès est un premier point d'entrée du système 6 de coordination auquel doit s'adresser tout service 7 qui reçoit une demande d'accès émanant d'un utilisateur 8. Le service 7 envoie, au module 11 d'accès, une requête contenant des informations concernant l'identité de l'utilisateur 8, comprenant au moins un identifiant et, éventuellement, un mot de passe, une adresse, ...et, des informations concernant le service 7, telles que les caractéristiques définissant la session entre l'utilisateur 8 et le service 7, l'adresse de la session, ...Le module 11 d'accès peut être un serveur ou tout moyen équivalent.

Le module 12 d'identification et d'authentification est en liaison avec le module 11 d'accès et a pour fonction d'identifier et d'authentifier l'utilisateur 8. A partir des informations concernant l'identité de l'utilisateur 8, le module 12 d'identification et d'authentification vérifie l'existence de cette identité et, pour les services 7 qui prévoient une authentification, il authentifie l'utilisateur 8. L'authentification consiste par exemple à vérifier qu'un mot de passe fourni par l'utilisateur 8 a été préalablement attribué à cet utilisateur 8. Le module 12 d'identification et d'authentification communique au module 11 d'accès le résultat de l'identification et de l'authentification. Le module 12 d'identification et d'authentification peut être absent ou remplacé par un module équivalent mais externe au système 6 de coordination. Lorsque le module 12 d'identification et d'authentification est absent, l'utilisateur doit fournir un identifiant pour accéder à un service. Selon un autre mode de réalisation, les fonctions identification et authentification peuvent être mises en oeuvre dans deux modules séparés. Le module 12 d'identification et d'authentification peut être installé sur le même serveur que le module 11 ou sur un autre serveur ou tout moyen équivalent.

Le module 13 de gestion de profils comprend un gestionnaire de profils et une base de données de profils. La base de données peut être stockée et répartie dans différentes mémoires locales ou distantes. Le module 13 de gestion de profils est en liaison avec le module 11 d'accès qui lui fournit l'identifiant de l'utilisateur 8. Le gestionnaire de profils interroge la base de données pour obtenir d'une part le profil qui correspond à l'identifiant de l'utilisateur 8 et d'autre part, lorsqu'ils existent, des profils personnalisés de services liés à ce profil. Le gestionnaire de profils crée un environnement pour cet utilisateur 8 et le fournit pour gestion au gestionnaire 15 d'environnement, ou l'un 15 des gestionnaires d'environnement s'il y en a plusieurs. Le module 13 de gestion de profils interroge ce gestionnaire 15 d'environnement en charge du profil de l'utilisateur et obtient en retour un identifiant de session de service propre au gestionnaire 15 d'environnement interrogé. Le module 13 de gestion de profils communique l'identifiant de session de service et l'adresse du gestionnaire 15 d'environnement dans le réseau 10 au module 11 d'accès qui les transmet au service 7 demandeur. Avant de créer un environnement pour l'utilisateur 8, le module 13 de gestion de profils s'assure qu'il n'y a pas déjà un gestionnaire d'environnement qui travaille sur l'environnement de l'utilisateur 8. S'il y en a déjà un, le module 13 de gestion de profils lui fournit les informations sur le service 7 demandeur pour qu'il modifie l'environnement de l'utilisateur 8. En retour, le gestionnaire 15 d'environnement envoie un identifiant de session de service au module 13 de gestion de profils que ce dernier communique, avec l'adresse du gestionnaire 15 d'environnement dans le réseau 10, au module 11 d'accès qui les transmet au service 7 demandeur. Les échanges précédemment décrits entre le gestionnaire 13 de profils et le gestionnaire 15 d'environnement garantissent l'unicité de l'environnement de l'utilisateur 8. Le module 13 de gestion de profils peut être installé sur un même serveur que le module 11 d'accès et le module 12 d'identification et d'authentification ou sur un autre serveur ou tout moyen équivalent. La base de données de profils peut être stockée sur une mémoire du serveur du module 13 de gestion de profils ou sur une mémoire de masse séparée.

Le gestionnaire 15 d'environnement est en liaison avec le module 13 de gestion de profils, le module 14 contractuel et il est un second point d'entrée du système 6 de coordination. A partir de la connaissance du contexte d'utilisation des services qui peuvent être sollicités par un utilisateur 8 et du profil de cet utilisateur 8, le gestionnaire 15 d'environnement effectue différentes opérations pour le compte des services. En particulier, il détermine les autorisations de prestations, les tarifs à appliquer, le coût d'une prestation, les actions à entreprendre auprès des services comme l'envoi d'une notification et l'envoi d'un ordre d'arrêt en s'appuyant sur le module contractuel. Le gestionnaire 15 d'environnement possède une logique propre qui lui permet de mener à bien les opérations précédentes et de dialoguer directement avec les services demandeurs. Cette logique repose sur la modélisation par un diagramme d'états des états que peut prendre l'environnement de l'utilisateur et des relations entre ses états. Les changements d'états sont déclenchés par des événements donnés dont certains sont associés aux différentes prestations offertes par les services. Chaque gestionnaire 15 d'environnement agit sur un ou plusieurs environnements d'utilisateur dont le gestionnaire 13 de profils lui a confié la gestion. Le gestionnaire 15 d'environnement peut être installé sur un même serveur que le module 13 de gestion de profils, le module 11 d'accès et le module 12 d'identification et d'authentification ou sur un autre serveur ou tout moyen équivalent.

Le module 14 contractuel comprend un module de tarification et valorisation, un module de catalogue des services et un module de gestion client. Le module de tarification et valorisation contient une liste de tarifs et de coûts de prestations liées aux services. Le module de catalogue des services contient les informations de description des services, ou contexte d'utilisation des services, communes à tous les utilisateurs du système 6 et à leurs environnements. Le module de gestion client contient une liste de contrats relatifs aux services souscrits par des utilisateurs. Les informations du module contractuel sont des informations utiles à l'exécution de la logique du gestionnaire 15 d'environnement dans sa décision d'accord de prestation du service 7 à l'utilisateur 8.

Le système de coordination 6 peut être entièrement installé sur une entité du Réseau intelligent connue sous l'appellation Point de Commande de Service Réseau, ou PCSR, aussi connue sous les sigles SCP, abréviation des termes anglo-saxons Service Control Point. Il peut aussi être distribué sur plusieurs serveurs connectés entre eux par un réseau.

Lorsqu'un utilisateur 8 souhaite accéder à un service 7, le déroulement est le suivant. Le service 7 s'adresse au premier point 11 d'entrée et fournit un premier identifiant donné par l'utilisateur. De manière optionnelle, une identification et, éventuellement, une authentification de l'utilisateur 8 sont effectuées. L'opération d'identification ou l'opération d'authentification peut aboutir à une réponse négative ou positive. La réponse est négative, par exemple, si l'utilisateur 8 est inconnu ou si le mot de passe fourni est incorrect. Lorsqu'elle est positive, l'opération d'identification se termine par la fourniture d'un second identifiant. La fourniture du premier identifiant ou, du second identifiant lorsqu'il existe, active le profil de l'utilisateur 8 et positionne automatiquement un indicateur qui signale au système 6 de coordination que le service 7 demande à être activé pour l'utilisateur 8. Le système 6 de coordination crée un environnement unique pour l'utilisateur connaissant son profil ; l'environnement étant constitué du profil de l'utilisateur et de ses sessions de service qui lui ont été attribuées. En fonction des informations qu'il obtient sur l'utilisateur par son profil et des informations qu'il obtient sur le service en particulier auprès du module contractuel, le système 6 de coordination valide ou pas la demande d'accès au service. Il peut ne pas valider cette demande lorsque par exemple le service est interdit à l'utilisateur. Après avoir validé la demande d'accès au service, le système 6 de coordination fournit au service 7 une session unique que le service 7 doit utiliser pour toutes les opérations suivantes. Pour les opérations suivantes, le service 7 s'adresse au second point 15 d'entrée du système 6 de coordination avec sa session lors de chaque opération. Ces opérations sont par exemple des opérations qui permettent au service 7 d'obtenir une autorisation de délivrer une prestation, d'obtenir des informations sur l'utilisateur 8, de demander le début ou la fin de la taxation d'une prestation, de modifier des informations sur l'utilisateur 8, de demander la notification d'un événement à l'utilisateur 8. Ou des opérations qui permettent de demander l'invocation d'un autre service 7 pour l'utilisateur 8 ou d'indiquer la fin du service 7 courant pour l'utilisateur 8.

Lorsque l'utilisateur 8 accède à un service 7 ce dernier doit interroger le système 6 de coordination :
- lorsque l'utilisateur 8 demande une prestation qui nécessite la localisation d'un utilisateur que le service 7 veut joindre,
- lorsque l'utilisateur 8 demande une prestation qui nécessite une personnalisation pour identifier l'utilisateur et obtenir des informations le concernant,
- lorsque l'utilisateur 8 demande une prestation qui nécessite un paiement et une facturation,
- lorsque l'utilisateur 8 demande une prestation qui conduit à fournir à l'utilisateur 8 des informations d'un domaine nécessitant une autorisation,
- lorsque l'utilisateur 8 demande une prestation qui conduit à réaliser pour l'utilisateur 8 une opération pour laquelle une autorisation est nécessaire,
- à la fin d'une prestation demandée par l'utilisateur 8 si celle-ci nécessite l'arrêt d'un paiement et d'une facturation et que ce paiement et cette facturation étaient fonction de la durée ou,
- à la fin du service 7 pour l'utilisateur 8 pour indiquer que ce service 7 se termine.

La figure 3 est un schéma d'utilisation multiservices d'un système de coordination selon l'invention. Un système de coordination 6 selon l'invention coordonne l'utilisation de différents services 7 par un même utilisateur 8. Les échanges entre les services 7 et le système 6 de coordination ont lieu à travers les liens du réseau 10. Les services 7 qui s'adressent au système 6 de coordination comprennent une interface qui dialogue avec les points d'entrée du système 6 de coordination et, comprennent des commandes accessibles au système 6 de coordination. Ces commandes permettent au système 6 de coordination d'envoyer des notifications aux services 7 et de les 7 contrôler en cas de besoin. Une des notifications est, par exemple, un message d'alerte pour informer l'utilisateur 8 que son crédit est presque épuisé. Le contrôle est nécessaire, par exemple, pour interrompre une prestation lorsque le crédit de l'utilisateur 8 est épuisé.

Un système de coordination selon l'invention est aussi multi-utilisateurs. Il coordonne simultanément l'utilisation de services pour différents utilisateurs, que les services utilisés par les différents utilisateurs soient identiques ou différents ou communs en partie.

## Revendications

1. Procédé de coordination d'utilisation de services de télécommunication, l'utilisation d'un service (7) étant sollicitée par un utilisateur (8) depuis un terminal (9) de télécommunication, **caractérisé en ce que** ledit procédé comprend les étapes qui consistent :
- à chaque demande d'accès à un service (7) émanant d'un utilisateur (8), à activer (1) un environnement unique composé d'un profil de cet utilisateur et de sessions de service associées à cet utilisateur (8) et à traiter la validation de la demande d'accès au service (7),
- à attribuer (2) une session unique à chaque service (7) dont la demande d'accès est valide, cette session faisant partie de l'environnement unique de l'utilisateur (8),
- à gérer (3) l'environnement unique, en modélisant les états que peut prendre l'environnement de l'utilisateur (8) et en modélisant les relations entre ses états par au moins un diagramme d'états dans lequel les changements d'états sont déclenchés par des événements donnés dont certains sont associés aux différentes prestations offertes par les services (7),
- à accorder (4) une demande de prestation formulée par un utilisateur (8) auprès d'un service (7) ayant une session, en fonction de l'état courant du diagramme d'états de l'environnement de l'utilisateur (8) et des événements associés à la demande de prestation et,
- à mettre à jour l'environnement de l'utilisateur (8) lors du passage à l'état suivant du diagramme d'états du service (7).

2. Procédé de coordination d'utilisation de services de télécommunication selon la revendication 1, **caractérisé en ce que** ledit procédé comprend en outre l'étape qui consiste :
- à chaque demande d'accès à un service (7) émanant d'un utilisateur (8), à identifier l'utilisateur (8) auprès d'un module d'identification en lui attribuant un identifiant.

3. Procédé de coordination d'utilisation de services de télécommunication selon la revendication 1, **caractérisé en ce que** ledit procédé comprend en outre les étapes qui consistent :
- à chaque demande d'accès à un service (7) émanant d'un utilisateur (8), à authentifier l'utilisateur (8) auprès d'un module d'authentification,
- à valider la demande d'accès au service (7) émanant de l'utilisateur (8) en fonction du résultat de l'authentification.

4. Système (6) de coordination d'utilisation de services (7) de télécommunication pour la mise en oeuvre d'un procédé selon l'une des revendications précédentes, l'utilisation d'un service (7) étant sollicitée par un utilisateur (8) depuis un terminal (9) de télécommunication, les services (7) de télécommunication étant connectés au système (6) de coordination par un réseau (10), **caractérisé en ce que** ledit système (6) comprend :
- un module (11) d'accès, premier point d'entrée du système (6) de coordination auquel s'adresse tout service (7), dit service demandeur, qui reçoit une demande d'accès émanant d'un utilisateur (8),
- un module (13) de gestion de profils en liaison avec le module (11) d'accès et comprenant une base de données de profils d'utilisateurs et de profils de services et comprenant au moins un gestionnaire de profils en liaison avec la base de données,
- un module (14) contractuel comprenant une liste de contrats souscrits par des utilisateurs (8) auprès de services (7) de télécommunication, des informations sur ces services (7) de télécommunication et une liste de tarification d'accès et de prestations et,
- au moins un gestionnaire (15) d'environnement en liaison avec le module (13) de gestion de profils et le module (14) contractuel, second point d'entrée du système (6) de coordination, auquel s'adresse tout service (7) dont la demande d'accès est valide.

5. Système (6) de coordination d'utilisation de services (7) de télécommunication selon la revendication 4, caractérisé en ce ledit système (6) comprend en outre :
- au moins un module (12) d'identification et d'authentification en liaison avec le module (11) d'accès.

6. Serveur **caractérisé en ce qu'**il comprend un système (6) de coordination d'utilisation de services (7) de télécommunication selon la revendication 4.

7. Ensemble de serveurs connectés entre eux par un réseau, **caractérisé en ce qu'**il comprend un système (6) de coordination d'utilisation de services (7) de télécommunication selon la revendication 4, les différents modules du système (6) de coordination étant répartis sur les différents serveurs.

8. Serveur **caractérisé en ce qu'**il comprend un module (13) de gestion de profils, un module (14) contractuel et un gestionnaire (15) d'environnement d'un système (6) de coordination selon la revendication 4.

9. Système (6) de coordination d'utilisation de services (7) de télécommunication selon la revendication 4, **caractérisé en ce que** le réseau (10) est le réseau Internet.

## Claims

1. A method of coordinating the use of telecommunications service providers when the use of a service provider (7) is invoked by a user (8) from a telecommunications terminal (9), which method is **characterized in that** it includes the following steps:
- on each request for access to a service provider (7) from a user (8), activating (1) a unique environment, consisting of a profile of said user and service sessions associated with said user (8), and processing validation of the service provider (7) access request,
- assigning (2) each service provider (7) whose access request is validated a unique session forming part of the unique environment of the user (8),
- managing (3) said unique environment by modeling the states that the environment of the user (8) can take and the relations between its states by means of a state diagram in which changes of state are triggered by given events, some of which are associated with the services offered by the service providers (7),
- granting (4) a service request submitted by a user (8) to a service provider (7) having a session as a function of the current state of the state diagram of the environment of the user (8) and events associated with the service request, and
- updating the environment of the user (8) on proceeding to the next state of the state diagram of the service provider (7).

2. A method according to claim 1 for coordinating the use of telecommunications service providers, **characterized in that** said method further includes the following step:
- on each request from a user (8) to access a service provider (7), identifying the user (8) to an identification module by assigning the user an identifier.

3. A method according to claim 1 for coordinating the use of telecommunications service providers, **characterized in that** said method further includes the following steps:
- on each request from a user (8) to access a service provider (7), authenticating the user (8) by means of an authentication module, and
- validating the request from the user (8) for access to the service provider (7) as a function of the result of the authentication.

4. A system (6) for coordinating the use of telecommunications service providers (7) by implementing a method according to any preceding claim when the use of a service provider (7) is invoked by a user (8) from a telecommunications terminal (9) and the telecommunications service providers (7) are connected to the coordination system (6) by a network (10), which system (6) is **characterized in that** it includes:
- an access module (11), constituting a first entry point of the coordination system (6) addressed by any service provider (7), referred to as a requester service provider, which receives an access request from a user (8),
- a profile manager module (13) connected to the access module (11) and including a user profile and service provider profile database and a profile manager connected to the database,
- a user agreement module (14) containing a list of agreements with the telecommunications service providers (7) entered into by the users (8), information on the telecommunications service providers (7), and a list of access and service charges, and
- at least one environment manager (15) connected to the profile manager module (13) and the user agreement module (14), constituting a second entry point to the coordination system (6) addressed by any service provider (7) whose access request is validated.

5. A system (6) according to claim 4 for coordinating the use of telecommunications service providers (7), **characterized in that** said system (6) further includes:
- at least one identification and authentication module (12) connected to the access module (11).

6. A server **characterized in that** it includes a system (6) according to claim 4 for coordinating the use of telecommunications service providers (7).

7. A set of servers interconnected by a network, **characterized in that** it includes a system (6) according to claim 4 for coordinating the use of telecommunications service providers (7) and **in that** modules of the coordination system (6) are distributed between the servers.

8. A server **characterized in that** it includes a profile manager module (13), a user agreement module (14) and an environment manager (15) of a coordination system (6) according to claim 4.

9. A system (6) according to claim 4 for coordinating use of telecommunications service providers (7), **characterized in that** the network (10) is the Internet.

## Patentansprüche

1. Koordinierungsverfahren für Telekommunikationsdienste, wobei die Nutzung eines Dienstes (7) durch einen Nutzer (8) von einem Telekommunikationsterminal (9) aus angefordert wird, **dadurch gekennzeichnet, dass** das genannte Verfahren die Stufen umfasst, die in Folgendem bestehen:
- in der Aktivierung (1) einer einzigartigen, aus einem Profil dieses Nutzers und diesem Nutzer (8) zugeordneten Dienstsitzungen bestehender Umgebung und in der Bearbeitung Bestätigung der Zugangsanfrage zum Dienst (7) bei jeder Zugangsanfrage zu einem Dienst (7) durch einen Nutzer (8),
- in der Zuordnung (2) einer einzigartigen Sitzung zu jedem Dienst (7), deren Zugangsanfrage gültig ist, wobei diese Sitzung zur einzigartigen Umgebung des Nutzers (8) gehört,
- in der Verwaltung (3) der einzigartigen Umgebung, durch die Modellgestaltung der Zustände, die die Umgebung des Nutzers (8) annehmen kann und durch die Modellgestaltung der Beziehungen zwischen seinen Zuständen durch wenigstens ein Zustandsdiagramm, in dem die Zustandsänderungen durch vorgegebene Ereignisse ausgelöst werden, von denen einige den unterschiedlichen, von den Diensten (7) angebotenen Leistungen zugeordnet sind,
- im Stattgeben (4) einer von einem Nutzer (8) bei einem Dienst (7) in einer Sitzung gestellten Leistungsanfrage in Abhängigkeit vom aktuellen Zustand des Zustandsdiagramms der Umgebung des Nutzers (8) und der der Leistungsanfrage zugeordneten Ereignisse, und
- in der Aktualisierung der Umgebung des Nutzers (8) beim Übergang in den nächsten Zustand des Zustandsdiagramms des Dienstes (7).

2. Koordinierungsverfahren zur Nutzung von Telekommunikationsdiensten gemäß Anspruch 1, **dadurch gekennzeichnet, dass** das genannte Verfahren darüber hinaus die Stufe umfasst, die in Folgendem besteht:
- In der Identifizierung des Nutzers (8) bei einem Identifizierungsmodul durch Zuordnung einer Kennung bei jeder Zugangsanfrage bei einem Dienst (7).

3. Koordinierungsverfahren zur Nutzung von Telekommunikationsdiensten gemäß Anspruch 1, **dadurch gekennzeichnet, dass** das genannte Verfahren darüber hinaus die Stufen umfasst, die in Folgendem bestehen:
- in der Authentifizierung des Nutzers (8) bei einem Authentifizierungsmodul bei jeder Zugangsanfrage zu einem Dienst (7) durch einen Nutzer (8),
- in der Bestätigung der Zugangsanfrage des Nutzers (8) zum Dienst (7) in Abhängigkeit vom Ergebnis der Authentifizierung.

4. Koordinierungssystem (6) zur Nutzung von Telekommunikationsdiensten (7) für die Umsetzung eines Verfahrens gemäß einem der vorherigen Ansprüche, wobei die Nutzung eines Dienstes (7) durch einen Nutzer (8) von einem Telekommunikationsterminal (9) aus angefordert wird, wobei die Telekommunikationsdienste (7) durch ein Netz (10) an das Koordinierungssystem (6) angeschlossen sind, **dadurch gekennzeichnet, dass** das genannte System (6) Folgendes umfasst:
- ein Zugangsmodul (11), erster Eingangspunkt des Koordinierungssystems (6), an den sich jeder als Anfragedienst bezeichneter Dienst (7) richtet, der eine Zugangsanfrage von einem Nutzer (8) erhält,
- ein Profilverwaltungsmodul (13) in Verbindung mit dem Zugangsmodul (11) und mit einer Datenbank der Nutzerprofile und der Dienstprofile und mit wenigstens einem mit der Datenbank verbundenen Profilverwalter,
- ein Vertragsmodul (14) mit einer Liste der von den Nutzern (8) bei den Telekommunikationsdiensten (7) abgeschlossenen Verträgen, Informationen über diese Telekommunikationsdienste (7) und eine Liste der Zugangsund Leistungstarife und
- wenigstens einen mit dem Profilverwaltungsmodul (13) und dem Vertragsmodul (14) verbundenen Umgebungsverwalter (15), zweiter Eingangspunkt des Koordinierungssystems (6), an den sich jeder Dienst (7) richtet, dessen Zugangsanfrage gültig ist.

5. Koordinierungssystem (6) zur Nutzung von Telekommunikationsdiensten (7) gemäß Anspruch 4, **dadurch gekennzeichnet, dass** das genannte System (6) darüber hinaus Folgendes umfasst:
- wenigstens ein mit dem Zugangsmodul (11) verbundenes Identifizierungs- und Authentifizierungsmodul (12).

6. Server, **dadurch gekennzeichnet, dass** er ein Koordinierungssystem (6) zur Nutzung von Telekommunikationsdiensten (7) gemäß Anspruch 4 umfasst.

7. Untereinander durch ein Netz angeschlossene Servergruppe, **dadurch gekennzeichnet, dass** sie ein Koordinierungssystem (6) zur Nutzung von Telekommunikationsdiensten (7) gemäß Anspruch 4 umfasst, wobei die unterschiedlichen Module des Koordinierungssystems (6) auf die verschiedenen Server verteilt sind.

8. Server, **dadurch gekennzeichnet, dass** er ein Profilverwaltungsmodul (13), ein Vertragsmodul (14) und einen Umgebungsverwalter (15) eines Koordinierungssystems (6) gemäß Anspruch 4 umfasst.

9. Koordinierungssystem (6) zur Nutzung von Telekommunikationsdiensten (7) gemäß Anspruch 4, **dadurch gekennzeichnet, dass** das Netz (10) das Internet ist.
